# EUROPÄISCHE PATENTSCHRIFT

(11) **EP 0 572 876 B1**
(45) Veröffentlichungstag und Bekanntmachung des Hinweises auf die Patenterteilung: **14.08.1996**
(21) Anmeldenummer: 93108256.4
(22) Anmeldetag: 21.05.1993
(51) Int. Cl.: B60B 11/02

(54) **Befestigungsvorrichtung zum lösbaren Befestigen einer Felge eines Zwillingsrades**
Mounting device for detachable fixing of a rim of dual wheels
Dispositif de fixation pour la fabrication détachable d'une jante de roues jumelées

(30) Priorität: 29.05.1992 DE 4217897
(43) Veröffentlichungstag der Anmeldung: 08.12.1993
(73) Patentinhaber: KOCK & SOHN RÄDER GmbH, D-48496 Hopsten (DE); Boss, Reinhard, D-48496 Hopsten (DE)
(72) Erfinder: Boss, Reinhard, W-4447 Hopsten (DE)
(74) Vertreter: Schulze Horn, Stefan, Dipl.-Ing. M.Sc.

(56) Entgegenhaltungen:
- EP-A- 0 229 683
- FR-A- 395 474
- FR-A- 2 259 706
- FR-E- 10 267
- US-A- 3 790 218

## Beschreibung

Die vorliegende Erfindung betrifft eine Befestigungsvorrichtung nach dem Oberbegriff des Patentanspruchs 1.

Eine derartige Befestigungsvorrichtung ist nach der europäischen Patentanmeldung 0 229 683 A2 bekannt. Bei der bekannten Befestigungsvorrichtung erfolgt die Verbindung des Zwillingsrades mit der Felge des Rades derart, daß der ringförmige Körper eine in Umfangsrichtung durchlaufende Nut aufweist, die bevorzugt einen trapezförmigen Querschnitt hat, und daß die äußeren Enden der Hebel Vorsprünge mit rechteckigem Querschnitt aufweisen, die in die Nut hineingreifen und die im Verbindungszustand mit ihrer Stirnfläche an den Nutgrund angedrückt sind.

Nachteilig ist bei der bekannten Befestigungsvorrichtung, daß der Ring mit der trapezförmigen Nut einen komplizierten Herstellungsprozeß erfordert und daß die Nut im landwirtschaftlichen Einsatz sich leicht mit Schmutz zusetzt, was lästige Reinigungsarbeiten vor Ansetzen des Zwillingsrades nötig macht.

Es ist die Aufgabe der vorliegenden Erfindung, eine bekannte Befestigungsvorrichtung so weiterzuentwickeln, daß der ringförmige Körper leicht herstellbar ist und daß im Betrieb eine verringerte schmutzempfindlichkeit erreicht wird.

Die Lösung erfolgt mit einer gattungsgemäßen Befestigungsvorrichtung mit den kennzeichnenden Merkmalen des Patentanspruchs 1.

Die Lösung ist überraschend einfach. Durch die Klemmung wird nicht nur ein Formschluß, sondern auch ein Kraftschluß erreicht. Der ringförmige Körper ist leicht gesondert aus einem Profilstahl herstellbar und in die Felge einschweißbar. Die Kraftübertragung von dem angetriebenen Rad zum Zwillingsrad erfolgt hier also durch Kraft- und Formschluß zwischen dem ringförmigen Körper und den Hebelenden. Die Betätigung der Vorrichtung erfolgt, indem durch manuelles Drehen der Schraubspindel in der Mutter sich die mit der Mutter verbundenen Hebel auseinanderspreizen und in Richtung zum Reifen hin mit ihrem gabelförmig ausgebildeten äußeren Ende gegen den ringförmigen Körper drücken, wobei das gabelförmige Ende den ringförmigen Körper teilweise umgreift und sich damit verklemmt, so daß der Hebel auch bei hoher Belastung der Räder nicht abrutscht. Es werden üblicherweise drei, fünf oder sieben sternförmig mit gleichmäßigen Winkelabständen (120°, 72° oder 51,4°) angeordnete Hebel verwendet, die jeweils an einer Speiche angelenkt sind, die von der Mutter zum äußeren Umfang der Felge des Zwillingsrades führt, wo sie z.B. durch Schweißen befestigt ist.

Bevorzugt hat der ringförmige Körper einen etwa kreisrunden Querschnitt und damit eine glatte, nicht zerklüftete Oberfläche, die nicht zum Schmutzansatz neigt.

Eine alternative Ausgestaltung sieht einen ringförmigen Körper mit einem trapezförmigen Querschnitt vor, wobei das gabelförmige Ende des Hebels einen entsprechend geformten Umriß aufweist. Auch dieser ringförmige Körper ist aus Profilstahl leicht herstellbar.

In einer Weiterbildung ist vorgesehen, daß zwischen dem ringförmigen Körper und der Felge mehrere, in Umfangsrichtung gleichmäßig beabstandete Distanzstücke befestigt sind und daß das äußere gabelförmige Ende des Hebels eine Ausnehmung aufweist, die mit dem Distanzstück in Eingriff bringbar ist. Durch die Anordnung der Distanzstücke wird eine zusätzliche formschlüssige Verbindung erreicht. Beim Andrücken des äußeren gabelförmigen Hebelendes auf den ringförmigen Körper gelangt bei winkelrichtigem Ansetzten der Befestigungsvorrichtung das Distanzstück in die entsprechend geformte Ausnehmung am Hebelende, die zweckmäßig etwa mittig in der äußeren Gabelspitze ausgebildet ist. Die Ausnehmung ist z.B. durch Fräsen oder Formschmieden leicht herstellbar. Die Distanzstücke können relativ schmal sein, um die Materialstärke am gabelförmigen Hebelende nicht zu groß wählen zu müssen.

Aus praktischen Erwägungen ist es zweckmäßig, 35 Distanzstücke in gleichmäßigen Abständen am Umfang vorzusehen, da dann sowohl fünf-speichige als auch sieben-speichige Befestigungsvorrichtungen eingesetzt werden können.

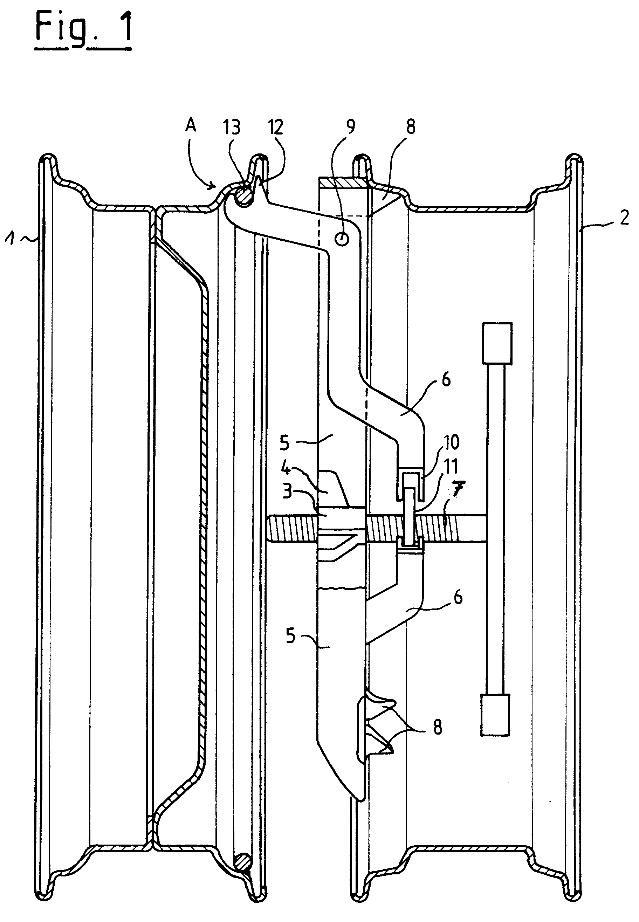

Beispiele der Erfindung werden nunmehr anhand einer Zeichnung näher erläutert. Sie zeigt in
- Figur 1: eine teilweise geschnittene Seitenansicht einer Befestigungsvorrichtung,
- Figur 2: einen vergrößerten Ausschnitt der Figur 1 bei Pfeil A,
- Figur 3: einen vergrößerten Ausschnitt der Figur 1 bei Pfeil A, jedoch mit einer Weiterbildung der Erfindung.
Mit Bezugnahme auf Figur 1 verbindet eine Befestigungs vorrichtung eine Felge 1 eines Traktors mit einer Zusatzfelge 2 eines Zwillingsrades. Die Reifen sind nicht dargestellt. Die Befestigungsvorrichtung weist eine fluchtend zur Antriebsachse der Felgen angeordnete Mutter 3 auf, an die bei dem dargestellten Beispiel drei Seitenflächen 4 angeschweißt sind, die sternförmig um jeweils 120° versetzt angeordnet sind. An den Seitenflächen 4 ist jeweils eine Speiche 5 angeschweißt, die sich zum äußeren Umfang der Felge 2 erstreckt und dort einen etwa kreissektorförmigen Ansatz aufweist, auf den jeweils zwei Dorne 8 aufgeschweißt sind, die sich beim Befestigen der Ansätze an die Innenseite der Felge 2 anlegen. Die kreissektorförmigen Ansätze sind auf die Felge 2 aufgeschweißt.

Durch die Mutter 3 führt eine mit einem passenden Gewinde versehene Schraubspindel 7, die einen zur Außenseite des Fahrzeugs weisenden Handgriff besitzt. Auf der Schraubspindel 7 ist zwischen Mutter 3 und Handgriff ein Ring 11 angeschweißt.

Jede Speiche 5 weist nahe dem kreissektorförmigen Ansatz einen Bolzen 9 auf, um den ein abgewinkelter, etwa L-förmiger Hebel 6 gelenkig schwenkbar ist. Das zur Schraubspindel 7 gerichtete Ende des Hebels 6 ist so gegabelt, das es den Ring 11 gleitend umfaßt. Das andere, äußere Ende 12 des Hebels 6 ist ebenfalls gegabelt, jedoch liegt diese äußere Gabelung in einer zur ersten Gabelung um 90° gedrehten Ebene und greift teilweise um den Querschnitt eines ringförmigen Körpers 13, der auf der Innenseite nahe des äußeren Randes der Felge 1 aufgeschweißt ist.

Beim Ansetzen eines Zwillingsrades auf der Felge 2 mit eingeschweißter Befestigungsvorrichtung wird mit dem Handgriff die Schraubspindel 7 so weit gedreht, daß die äußeren Enden 12 der Hebel 6 in einer Position sind, die ein bequemes Einsetzen des Zwillingsrades erlaubt. Darauf wird der Handgriff entgegengesetzt gedreht, wodurch die äußeren Enden 12 der Hebel 6 sich radial nach außen bewegen und sich mit ihren Gabelungen an den ringförmigen Körper 13 anlegen und durch noch weiteres Drehen des Handgriffs verspannt werden.

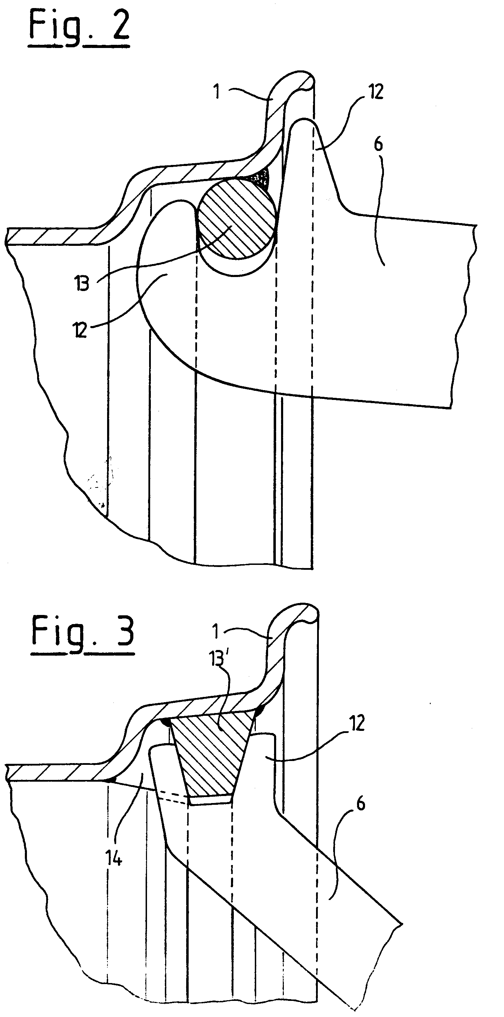

Figur 2 zeigt ausschnittsweise gegenüber Figur 1 vergrößert den Eingriff des äußeren Endes 12 eines der Hebel 6 an dem ringförmigen Körper 13, hier mit einem kreisförmigen Querschnitt, der an eine Felge 1 angeschweißt ist.

Gemäß Figur 3 weist eine Weiterbildung einen ringförmigen Körper 13' von trapezförmigem Querschnitt auf, der in eine Felge 1 eingeschweißt ist. Zwischen der Wand der Felge 1 und dem ringförmigen Körper 13' sind Distanzstücke 14 angeschweißt, die auch die Funktion von Mitnehmern haben. Das äußere Ende 12 des Hebels 6 ist wie vorstehend beschrieben so gegabelt, daß es auf den ringförmigen Körper 13' drückt und ihn teilweise umgreift; zusätzlich ist das in Figur 3 links befindliche Ende der Gabelung mit einer Ausnehmung versehen (siehe gestrichelte Linie), so daß das Distanzstück 14 teilweise in dieser Ausnehmung liegt.

## Patentansprüche

1. Befestigungsvorrichtung zum lösbaren Befestigen einer Felge (2) eines Zwillingsrades an einer Felge (1) eines Rades eines Landfahrzeugs, insbesondere von Traktoren, mit einer fluchtend zur Achse der Räder angeordneten Mutter (3), mehreren an der Mutter befestigten, zur Felge (2) des Zwillingsrades laufenden Speichen (5), wobei zumindest an einigen Speichen (5) ein etwa L-förmig ausgebildeter Hebel (6) schwenkbar befestigt ist, dessen inneres Ende mit einer Schraubspindel (7) in Eingriff ist, die mit der Mutter (3) zusammenwirkt, und wobei das äußere Ende des Hebels (6) in Befestigungsstellung der Vorrichtung mit einem ringförmigen Körper (13, 13') zusammenwirkt, welcher an der Außenseite der Felge (1) eines Rades eines Landfahrzeugs befestigt ist,
**dadurch gekennzeichnet,**
daß das äußere Ende (12) des Hebels (6) gabelförmig ausgebildet ist und den ringförmigen Körper (13, 13') in Befestigungsstellung der Vorrichtung teilweise umgreift, und daß der Querschnitt des ringförmigen Körpers (13, 13') und die Kontur des gabelförmigen Endes (12) derart ausgebildet und aufeinander abgestimmt sind, daß das gabelförmige Ende (12) bei seiner Verschwenkung in Radialrichtung der Felge (2) des Zwillingsrades nach außen hinkraft- und formschlüssig unter gegenseitiger Verklemmung gegen den ringförmigen Körper (13, 13') drückbar ist.

2. Befestigungsvorrichtung nach Anspruch 1, dadurch gekennzeichnet, daß der Querschnitt des ringförmigen Körpers (13) kreisrund ist.

3. Befestigungsvorrichtung nach Anspruch 1, dadurch gekennzeichnet, daß der Querschnitt des ringförmigen Körpers (13') trapezförmig ist.

4. Befestigungsvorrichtung nach einem der vorangegangenen Ansprüche, dadurch gekennzeichnet, daß zwischen dem ringförmigen Körper (13, 13') und der Felge (1) des Landfahrzeugs mehrere, in Umfangsrichtung geichmäßig beabstandete Distanzstücke (14) befestigt sind und daß das äußere gabelförmige Ende (12) des Hebels (6) eine zusätzliche, in Axialrichtung der Felgen (1, 2) verlaufende Aussparung aufweist, die mit dem Distanzstück (14) in Eingriff bringbar ist.

5. Befestigungsvorrichtung nach Anspruch 4, dadurch gekennzeichnet, daß 35 in Umfangsrichtung gleichmäßig beabstandete Distanzstücke (14) angebracht sind.

## Claims

1. Fastening device for detachably fastening a rim (2) of a double wheel to a rim (1) of a wheel of an agricultural vehicle, in particular a tractor, comprising a screw nut (3) aligned with the axis of the wheels, several spokes (5) extending to the rim (2) of the double wheel and attached to the screw nut, wherein at least at some spokes (5) an approximately L-shaped lever (6) is pivotally fastened with the inner end thereof engaged with a threaded spindle (7) cooperating with the screw nut (3), and wherein the outer end of the lever (6) cooperates with an annular member (13, 13') in the fastening position of the device with the annular member attached to the outer side of the rim (1) of a wheel of an agricultural vehicle,
**characterized in**,
that the outer end (12) of the lever (6) is shaped bifurcated and partly encompassing the annular member (13, 13') in the fastening position of the device, and that the cross-section of the annular member (13, 13') and the contour of the bifurcated end are shaped in correspondence with each other such, that the bifurcated end (12) when pivoted in radial direction of the rim (2) of the double wheel is pressable outwards against the annular member (13, 13') in positive and non-positive fit and mutual jamming.

2. Fastening device according to claim 1, characterized in that the cross-section of the annular member (13) is circular.

3. Fastening device according to claim 1, characterized in that the cross-section of the annular member (13') is trapezoidal.

4. Fastening device according to one of the preceeding claims, characterized in that several spacer blocks (14) evenly spaced in circumferential direction are fastened between the annular member (13, 13') and the rim (1) of the agricultural vehicle, and that the outer bifurcated end (12) of the lever (6) comprises an additional recess extending in axial direction of the rims (1, 2) with the recess engageable with the spacer block (14).

5. Fastening device according to claim 4, characterized in that 35 spacer blocks (14) evenly spaced in circumferential direction are provided.

## Revendications

1. Dispositif de fixation destiné à fixer de façon libérable une jante (2) d'une roue jumelle à une jante (1) d'une roue d'un véhicule agricole, en particulier des tracteurs, incluant un écrou (3) disposé en affleurement sur l'axe de roue, plusieurs rayons (5) fixés sur l'écrou et s'étendant jusqu'à la jante (2) de la roue jumelle, au moins un levier (6) configuré approximativement en forme de L étant fixé à pivotement sur au moins quelques rayons (5), l'extrémité intérieure du levier étant en prise avec une broche filetée (7) qui coopère avec l'écrou (3), et l'extrémité extérieure du levier (6) coopérant en position de fixation du dispositif avec un corps annulaire (13, 13') qui est fixé sur le côté extérieur de la jante (1) d'une roue d'un véhicule agricole, caractérisé en ce que l'extrémité extérieure (12) du levier (6) est en forme de fourche et enserre partiellement le corps annulaire (13, 13') dans la position de fixation du dispositif et en ce que la section transversale du corps annulaire (13, 13') et le contour de l'extrémité (12) en forme de fourche sont configurés et adaptés l'un à l'autre d'une manière telle que l'extrémité en forme de fourche (12) peut être appuyée en coincement réciproque contre le corps annulaire (13, 13'), par effet de force et en engagement positif, lors de son pivotement dans la direction radiale de la jante (2) de la roue jumelée.

2. Dispositif de fixation selon la revendication 1, caractérisé en ce que la section transversale du corps annulaire (13) est circulaire.

3. Dispositif de fixation selon la revendication 1, caractérisé en ce que la section transversale du corps annulaire (13') est trapézoïdale.

4. Dispositif de fixation selon l'une des revendications précédentes, caractérisé en ce que plusieurs entretoises (14) également espacées dans la direction périphérique sont fixées entre le corps annulaire (13, 13') et la jante (1) du véhicule agricole et en ce que l'extrémité extérieure (12) en forme de fourche du levier (6) présente un évidement additionnel dont le tracé suit la direction axiale des jantes (1, 2) et qui peut être mis en prise avec l'entretoise (14).

5. Dispositif de fixation selon la revendication 4, caractérisé en ce que 35 entretoises (14) également espacées sont disposées dans la direction périphérique.
